# FASCICULE DE BREVET EUROPEEN

(11) **EP 3 224 124 B1**
(45) Date de publication et mention de la délivrance du brevet: **22.05.2019**
(21) Numéro de dépôt: 15788162.4
(22) Date de dépôt: 09.10.2015
(51) Int. Cl.: B62D 35/02

(54) **VEHICULE AVEC DEFLECTEUR D'AIR POUR ROUE**
FAHRZEUG MIT WINDABWEISER FÜR EIN RAD
VEHICLE WITH AIR DEFLECTOR FOR WHEEL

(30) Priorité: 26.11.2014 FR 1461489
(43) Date de publication de la demande: 04.10.2017
(73) Titulaire: PSA Automobiles SA, 78300 Poissy (FR)
(72) Inventeur: PUJALS, Grégory, 92120 Montrouge (FR); RUIZ, Tony, 92210 Saint Cloud (FR); THAI VAN, Jean-Philippe, 92320 Chatillon (FR)
(86) Numéro de dépôt international: PCT/FR2015/052726
(87) Numéro de publication internationale: WO 2016/083682

(56) Documents cités:
- EP-A2- 2 607 215
- WO-A1-2011/126069
- CA-A1- 1 156 293
- DE-A1-102010 037 616
- FR-A1- 2 858 793
- GB-A- 2 513 541
- JP-A- 2006 069 396
- JP-U- H03 120 280
- JP-U- S63 111 378

## Description

L'invention a trait à l'aérodynamisme d'un véhicule automobile. Plus particulièrement, l'invention a trait à la réduction de la trainée aérodynamique d'un véhicule automobile. Le dessous d'un véhicule automobile est généralement une zone de résistance à la pénétration dans l'air du véhicule. A haute vitesse, la résistance provient principalement des forces aérodynamiques exercées sur le véhicule à travers les régions de surpression d'air et les régions de dépression d'air, par exemple par décollement ou inversion locale de l'écoulement. Ces forces aérodynamiques s'opposent à l'avancement du véhicule. En particulier, les roues d'un véhicule automobile exercent sur leur face frontale une surpression d'air qui génère une force résistante de trainée. Par ailleurs, l'écoulement de l'air s'engouffre généralement dans les passages de roues et on peut observer des décollements d'air en aval de ces passages de roues. Les forces aérodynamiques résistantes travaillant négativement dans le bilan énergétique du véhicule, elles génèrent une augmentation de la consommation en carburant, il est donc recherché à la minimiser.

Le brevet d'invention EP 2 607 215 A2 et JP S63 111378 U divulguent des déflecteurs d'air monté sous le véhicule en amont des roues. Les déflecteurs comprennent une face avant inclinée destinée à écarter l'écoulement d'air de la face frontale des roues. L'écartement de l'écoulement d'air permet de générer un sillage d'air à pression réduite. Les roues sont situées dans le sillage à pression réduite de façon à diminuer la force de trainée. Le déflecteur n'est cependant applicable que pour un certain type de véhicule, la face avant réduisant la hauteur sous plancher du véhicule. En particulier, une hauteur réduite sous plancher en avant des roues est pénalisante du point de vue de la garde au sol (notamment à l'abord d'un trottoir).

Le brevet d'invention FR 2 858 793 B1 divulgue des éléments déflecteur d'air mobiles montés sous le véhicule en amont ou en aval des roues. Les éléments comprennent un boîtier dans lequel pivote un déflecteur entre une position escamotée dans le véhicule et une position en saillie. Cet enseignement est intéressant en ce que la modification de l'écoulement est dynamique selon les conditions d'utilisation du véhicule, en particulier de sa vitesse. La propriété escamotable des déflecteurs facilite par exemple l'abord d'un trottoir. Les modes de réalisation des faces actives du déflecteur sont cependant réduites pour la réalisation du boîtier, notamment pour réduire l'encrassement du boîtier. De plus, la solution de cet enseignement peut poser des problèmes de fiabilité et présente un coût plus important.

L'invention a pour objectif de proposer une solution palliant au moins un inconvénient de l'état de la technique, en particulier de l'état de la technique susmentionné. L'invention a plus particulièrement pour objectif de proposer une solution pour modifier l'écoulement d'air au niveau des roues et des passages de roue qui soit efficace et économique.

L'invention a pour objet un déflecteur d'air destiné à être monté sous un véhicule automobile, à l'avant d'une roue du véhicule, en vue de réduire la trainée aérodynamique au niveau de ladite roue, ledit déflecteur d'air comprenant : une face avant inclinée de profil concave ; deux faces latérales de part et d'autre de la face avant, respectivement ; remarquable en ce qu'au moins une des deux faces latérales présente un profil concave. La concavité est exprimée par rapport à l'écoulement d'air sur l'extérieur du volume formé par le déflecteur d'air.

Selon un mode avantageux de l'invention, le déflecteur d'air présente une section transversale qui augmente progressivement de hauteur et de largeur depuis l'avant jusqu'à l'arrière dudit déflecteur d'air.

Selon un mode avantageux de l'invention, le profil de la face avant et/ou d'au moins une des faces latérales correspond à une fonction exponentielle.

Selon un mode avantageux de l'invention, le profil de la face avant et/ou d'au moins une des faces latérales correspond à l'équation *y* = *A.exp*(*B.x*) où y exprime la hauteur de la face et x exprime la position selon une direction longitudinale du déflecteur d'air, A et B étant des paramètres.

Selon un mode avantageux de l'invention, le paramètre A est compris entre 1 et 2, et/ou le paramètre B est compris entre 0.01 et 0.05.

Selon un mode avantageux de l'invention, la hauteur maximale de la face avant est comprise entre 20mm et 90mm, préférentiellement entre 30mm et 70mm.

Selon un mode avantageux de l'invention, la face avant et les faces latérales du déflecteur d'air sont réalisées en matériau rigide et déformable élastiquement, préférentiellement un élastomère.

Avantageusement, le matériau rigide et déformable élastiquement est d'une dureté shore A supérieure à 45.

L'invention a également trait à un véhicule automobile comprenant : des passages de roue avant et arrière ; des déflecteurs d'air situé à l'avant des passages de roue avant et/ou des passages de roue arrière ; remarquable en ce que les déflecteurs d'air sont conformes à l'invention.

Selon un mode avantageux de l'invention, au moins un, préférentiellement chacun, des déflecteurs d'air est décalé latéralement vers l'intérieur du véhicule par rapport à la roue du passage de roue correspondant et est orienté vers l'extérieur, son axe longitudinal formant un angle compris entre 10° et 20° avec l'axe longitudinal du véhicule. Plus précisément, le ou les déflecteurs s'étendent longitudinalement d'avant en arrière du véhicule vers l'extérieur en formant l'angle susmentionné.

Selon un mode avantageux de l'invention, le ou chacun des déflecteurs d'air décalés latéralement vers l'intérieur du véhicule par rapport à la roue est décalé d'une distance comprise entre 80 et 300mm, préférentiellement entre 100mm et 250mm, par rapport à l'axe longitudinal de la roue.

Selon un mode avantageux de l'invention, la face avant et les faces latérales des déflecteurs d'air sont disposées de manière à dévier l'air vers le bas et les côtés, respectivement, de la roue du passage de roue correspondant.

Selon un mode avantageux de l'invention, le déflecteur d'air est à une distance de la face frontale de la roue inférieure à 300mm, préférentiellement inférieure à 200mm.

Selon un mode avantageux de l'invention, le véhicule comprend, en outre, un ou plusieurs déflecteurs d'air à l'arrière des passages de roue lesdits déflecteurs d'air étant conformes à l'invention.

Pour les roues avant l'axe longitudinal de la roue s'entend lorsque les roues sont parallèles à l'axe longitudinal du véhicule, c'est-à-dire lorsque le véhicule évolue en ligne droite.

Les mesures de l'invention sont intéressantes en ce que les déflecteurs d'air permettent de modifier efficacement l'écoulement d'air au niveau des roues et des passages de roue. En effet, les surfaces concaves de la face avant et de la ou des faces latérales des déflecteurs d'air permettent une modification efficace du flux d'air. Par ailleurs la position des déflecteurs d'air à l'intérieur du véhicule par rapport à l'axe des roues augmente le volume d'air impacté, en particulier celui se dirigeant vers les passages de roue.

D'autres caractéristiques et avantages de la présente invention seront mieux compris à l'aide de la description et des dessins parmi lesquels :
- La figure 1 est une vue en perspective d'un véhicule automobile comprenant des déflecteurs d'air conforme à l'invention ;
- La figure 2 est une vue de dessous du véhicule automobile de la figure 1 ;
- La figure 3 est une vue en perspective de trois quarts avant d'un déflecteur d'air conforme à l'invention ;
- La figure 4 est une vue de côté du déflecteur d'air de la figure 3 ;
- La figure 5 est une vue de dessus du déflecteur d'air de la figure 3 ;

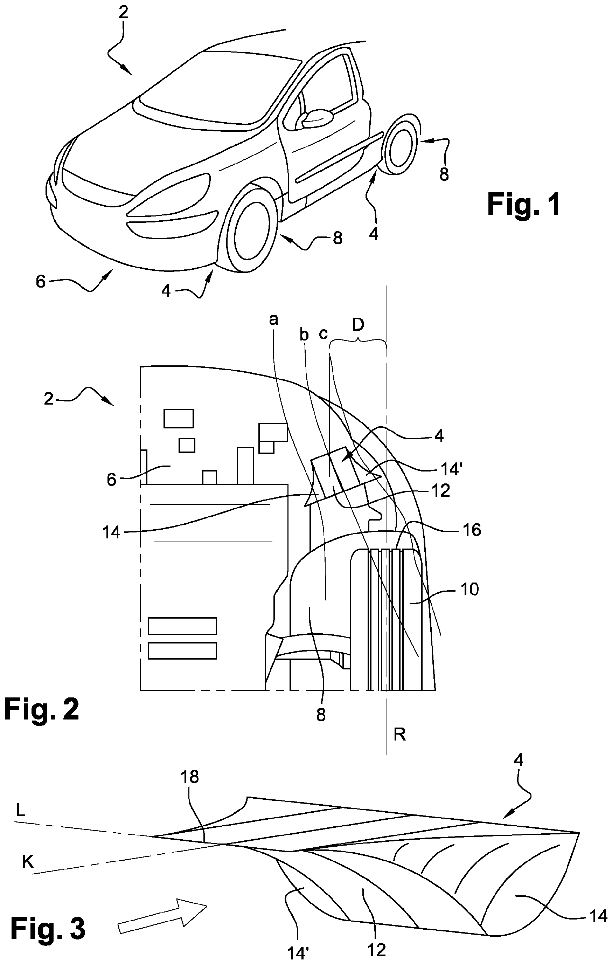

La figure 1 est une vue en perspective d'un véhicule automobile 2 comprenant des déflecteurs d'air 4 conformes à l'invention. Le dessous 6 du véhicule automobile 2 comprend des passages de roue 8 situés à l'avant ainsi qu'à l'arrière du véhicule. Les déflecteurs d'air 4 sont situés devant et/ou derrière les roues en vue de réduire la trainée aérodynamique des roues. Ils permettent également de modifier l'écoulement d'air au niveau des passages de roue.

La figure 2 est une vue du dessous 6 du véhicule automobile 2 conforme à l'invention. On peut précisément voir une roue 10 logée dans un passage de roue 8 situé à l'avant gauche du véhicule 2. Le déflecteur d'air 4 conforme à l'invention est situé, en l'occurrence, en avant du passage de roue 8. Le déflecteur d'air 4 comprend une face avant 12 et des faces latérales 14 et 14' qui sont disposées de manière à dévier l'air vers le bas et les côtés de la roue 10. On peut voir que le déflecteur d'air 4 est à une distance de la face frontale 16 de la roue qui est inférieure à 300mm, préférentiellement inférieure à 200mm. Cette mesure est intéressante en ce que le flux d'air dévié par le déflecteur 4 est apte à s'écarter de la roue 10 et réduire la surpression d'air au niveau de la face frontale 16. On peut également voir que le déflecteur d'air 4 est disposé vers l'intérieur du véhicule par rapport à l'axe longitudinal « R » de la roue. Pour les roues avant l'axe longitudinal « R » de la roue 10 s'entend lorsque la roue est parallèle à l'axe longitudinal du véhicule, c'est-à-dire lorsque le véhicule évolue en ligne droite. La disposition du déflecteur d'air 4 est décrite plus précisément ci-après, on peut déjà comprendre qu'elle est en lien avec la zone de basse pression relative formée par le passage de roue 8. En effet, le mouvement du flux d'air sous le véhicule 2 est impacté par cette zone de basse pression en ce qu'il est dévié vers cette zone. Trois lignes de flux « a », « b », « c » sont représentées sur l'image pour illustrer le phénomène, elles se présentent en avant du véhicule dans une direction longitudinale, elles sont ensuite déviées latéralement vers le passage de roue 8. On peut noter que le déflecteur d'air 4 est décalé d'une distance « D » comprise entre 80 et 300mm, préférentiellement entre 100mm et 250mm, par rapport à l'axe longitudinal « R » de la roue 10. On peut également observer que le déflecteur d'air 4 est orienté vers l'extérieur, son axe longitudinal formant un angle compris entre 10° et 20° avec l'axe longitudinal du véhicule. Cette mesure est intéressante de sorte à ce que le déflecteur d'air 4 peut impacter une majeure partie du flux d'air dévié vers le passage de roue 8.

La figure 3 est une vue en perspective de trois quarts avant d'un déflecteur d'air 4 conforme à l'invention. L'axe longitudinal et l'axe transversal du déflecteur d'air sont représentés sur l'image par les axes K et L, respectivement. On peut voir la face avant concave 12 du déflecteur d'air ainsi que les deux faces latérales 14 et 14' du déflecteur 4 formées de part et d'autres de la face avant 12 et qui sont également concaves. La face latérale 14' en arrière de l'image n'est que peu visible. La concavité des faces du déflecteur d'air 4 est exprimée par rapport à l'écoulement d'air, représenté schématiquement par une flèche, sur l'extérieur (en dessous sur l'image) du volume formé par le déflecteur 4. La face intérieure du déflecteur (au dessus sur l'image) est destinée à être contre le dessous du véhicule. Le bord d'attaque 18, à gauche sur l'image, est celui destiné à être orienté vers l'avant du véhicule dans le mode de réalisation ou le déflecteur est en avant d'une roue. On peut déjà noter que le profil concave des faces avant 12 et latérales 14 et 14' est favorable pour retarder l'interférence avec le relief de la route, par exemple vis-à-vis d'un trottoir. La face avant 12 ainsi que les faces latérales 14 et 14' sont inclinées vers le bas de manière à dévier le flux d'air vers le bas. Les faces latérales 14 et 14' sont, en outre, inclinées vers le côté de manière à dévier le flux d'air latéralement vers l'axe «L » sur les côtés du déflecteur. Cette mesure est intéressante en ce qu'elle augmente la portion impactée du volume d'air passant sous le véhicule et se dirigeant vers le passage de roue. Chacune des faces latérales 14 et 14' forme avantageusement une surface comprise entre 30% et 60% de la face avant 12 du déflecteur d'air. La face avant 12 et les faces latérales 14 et 14' du déflecteur d'air 4 sont favorablement réalisées en matériau rigide et déformable, préférentiellement en élastomère. Cette mesure est intéressante en ce qu'elle favorise la résistance aux chocs, par exemple au choc des projectiles provenant de la route.

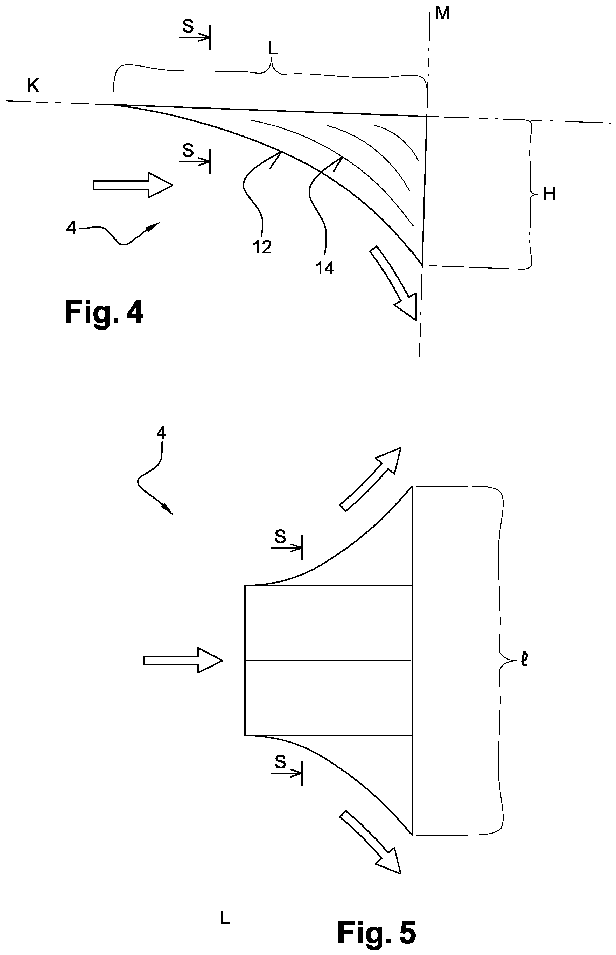

La figure 4 est une vue de côté du déflecteur d'air 4 conforme à l'invention. Le déflecteur d'air 4 présente une section transversale S-S qui augmente progressivement de hauteur depuis l'avant (à gauche sur l'image) jusqu'à l'arrière dudit déflecteur d'air 4 (à droite sur l'image). La hauteur ici exprimée est selon l'axe « M » vertical sur l'image et destiné à être l'axe vertical une fois que le déflecteur d'air est monté sur le véhicule. On peut observer la face avant 12 ainsi qu'une 14 des deux faces latérales. Le profil de la face avant 12 et des faces latérales du déflecteur 4 correspond à une fonction exponentielle selon l'équation *y* = *A.exp*(*B.x*) où y exprime la hauteur de la face dans la direction « M » et x exprime la position selon la direction longitudinale « K » du déflecteur. A et B sont des paramètres, A pouvant être compris entre 1 et 2, B pouvant être compris entre 0,01 et 0,05. Les paramètres sont différents selon que l'on définit la face avant 12 ou bien les faces latérales. On peut voir à droite de l'image la hauteur maximale H de la face avant 12 qui est comprise entre 20mm et 90mm, préférentiellement entre 30mm et 70mm. Une hauteur H de 30mm est favorable pour les véhicules à faible garde au sol. La longueur L dans la direction longitudinale « K » du déflecteur 4 est comprise entre 50 et 250mm.

La figure 5 est une vue de dessus d'un déflecteur d'air 4 conforme à l'invention. On peut voir que la section S-S vue en relation avec la figure précédente augmente progressivement de largeur dans la direction « L » depuis l'avant (à gauche sur l'image) jusqu'à l'arrière dudit déflecteur. On peut voir à droite de l'image la largeur maximale « I » du déflecteur 4 pouvant être comprise entre 100mm et 300mm selon la largeur de la roue protégé par le déflecteur d'air 4.

## Revendications

1. Véhicule automobile (2) comprenant :
- des passages de roue (8) avant et arrière ;
- des déflecteurs d'air (4) situés à l'avant des passages de roue (8) avant et/ou des passages de roue (8) arrière, en vue de réduire la trainée aérodynamique au niveau de ladite roue (10), lesdits déflecteurs d'air (4) comprenant une face avant (12) inclinée de profil concave et deux faces latérales (14 ; 14') de part et d'autre de la face avant (12) dont respectivement au moins une des deux faces latérales (14 ; 14') présente un profil concave,
**caractérisé en ce qu'**au moins un, préférentiellement chacun, des déflecteurs d'air (4) est décalé latéralement vers l'intérieur du véhicule (2) par rapport à la roue (10) du passage de roue (8) correspondant et orienté vers l'extérieur, son axe longitudinal (K) formant un angle compris entre 10° et 20° avec l'axe longitudinal du véhicule.

2. Véhicule automobile (2) selon la revendication 1, **caractérisé en ce que** le déflecteur d'air (4) présente une section transversale (S-S) qui augmente progressivement de hauteur et de largeur depuis l'avant jusqu'à l'arrière dudit déflecteur d'air (4).

3. Véhicule automobile (2) selon l'une des revendications 1 et 2, **caractérisé en ce que** le profil de la face avant (12) et/ou d'au moins une des faces latérales (14 ; 14') correspond à une fonction exponentielle.

4. Véhicule automobile (2) selon l'une des revendications 1 à 3, **caractérisé en ce que** le profil de la face avant (12) et/ou d'au moins une des faces latérales (14 ; 14') correspond à l'équation *y* = *A.exp*(*B.x*) où y exprime la hauteur de la face et x exprime la position selon une direction longitudinale (K) du déflecteur d'air (4), A et B étant des paramètres.

5. Véhicule automobile (2) selon la revendication 4, **caractérisé en ce que** le paramètre A est compris entre 1 et 2, et/ou le paramètre B est compris entre 0.01 et 0.05.

6. Véhicule automobile (2) selon l'une des revendications 1 à 5, **caractérisé en ce que** la hauteur maximale (H) de la face avant (12) est comprise entre 20mm et 90mm, préférentiellement entre 30mm et 70mm.

7. Véhicule automobile (2) selon l'une des revendications 1 à 6, **caractérisé en ce que** le ou chacun des déflecteurs d'air (4) décalés latéralement vers l'intérieur du véhicule par rapport à la roue (10) est décalé d'une distance comprise entre 80mm et 300mm, préférentiellement entre 100mm et 250mm, par rapport à l'axe longitudinal (R) de la roue (10).

8. Véhicule automobile (2) selon l'une des revendications 1 à 7, **caractérisé en ce que** la face avant (12) et les faces latérales (14 ; 14') des déflecteurs d'air (4) sont disposées de manière à dévier l'air vers le bas et les côtés, respectivement, de la roue (10) du passage de roue (8) correspondant.

## Patentansprüche

1. Kraftfahrzeug (2), umfassend:
- vordere und hintere Radkästen (8);
- Luftdeflektoren (4), die sich an der Vorderseite der vorderen Radkästen (8) und/oder der hinteren Radkästen (8) befinden, um den aerodynamischen Strömungswiderstand im Bereich des Rades (10) zu reduzieren, wobei die Luftdeflektoren (4) eine geneigte Vorderfläche (12) mit konkavem Profil und zwei Seitenflächen (14; 14') auf beiden Seiten der Vorderfläche (12) umfassen, von denen jeweils mindestens eine der zwei Seitenflächen (14; 14') ein konkaves Profil aufweist,
**dadurch gekennzeichnet, dass** mindestens einer, vorzugsweise jeder der Luftdeflektoren (4) in Bezug auf das Rad (10) des entsprechenden Radkastens (8) seitlich zur Innenseite des Fahrzeugs (2) hin versetzt und zur Außenseite hin ausgerichtet ist, wobei seine Längsachse (K) einen Winkel im Bereich zwischen 10° und 20° zur Längsachse des Fahrzeugs bildet.

2. Kraftfahrzeug (2) nach Anspruch 1, **dadurch gekennzeichnet, dass** der Luftdeflektor (4) einen Querschnitt (S-S) aufweist, der von der Vorderseite bis zur Rückseite des Luftdeflektors (4) zunehmend an Höhe und an Breite zunimmt.

3. Kraftfahrzeug (2) nach einem der Ansprüche 1 und 2, **dadurch gekennzeichnet, dass** das Profil der Vorderfläche (12) und/oder mindestens einer der Seitenflächen (14; 14') einer Exponentialfunktion entspricht.

4. Kraftfahrzeug (2) nach einem der Ansprüche 1 bis 3, **dadurch gekennzeichnet, dass** das Profil der Vorderfläche (12) und/oder mindestens einer der Seitenflächen (14; 14') der Gleichung *y* = *A.exp(B.x)* entspricht, wobei y die Höhe der Fläche ausdrückt und x die Position in einer Längsrichtung (K) des Luftdeflektors (4) ausdrückt, wobei A und B Parameter sind.

5. Kraftfahrzeug (2) nach Anspruch 4, **dadurch gekennzeichnet, dass** der Parameter A im Bereich zwischen 1 und 2 liegt, und/oder der Parameter B im Bereich zwischen 0,01 und 0,05 liegt.

6. Kraftfahrzeug (2) nach einem der Ansprüche 1 bis 5, **dadurch gekennzeichnet, dass** die maximale Höhe (H) der Vorderfläche (12) im Bereich zwischen 20 mm und 90 mm, vorzugsweise zwischen 30 mm und 70 mm liegt.

7. Kraftfahrzeug (2) nach einem der Ansprüche 1 bis 6, **dadurch gekennzeichnet, dass** der oder jeder der Luftdeflektoren (4), der in Bezug auf das Rad (10) zur Innenseite des Fahrzeugs hin versetzt ist, um einen Abstand im Bereich zwischen 80 mm und 300 mm, vorzugsweise zwischen 100 mm und 250 mm in Bezug auf die Längsachse (R) des Rades (10) versetzt ist.

8. Kraftfahrzeug (2) nach einem der Ansprüche 1 bis 7, **dadurch gekennzeichnet, dass** die Vorderfläche (12) und die Seitenflächen (14; 14') der Luftdeflektoren (4) so angeordnet sind, dass sie die Luft jeweils nach unten und zu den Seiten des Rades (10) des entsprechenden Radkastens (8) ablenken.

## Claims

1. Motor vehicle (2) comprising:
- front and rear wheel arches (8);
- air deflectors (4) situated at the front of the front wheel arches (8) and/or rear wheel arches (8), in view of reducing the aerodynamic drag at the level of said wheel (10), said air deflectors (4) comprising an inclined front face (12) of concave profile and two side faces (14; 14') on either side of the front face (12) of which respectively at least one of the two side faces (14; 14') has a concave profile,
**characterised in that** at least one, preferably each, of the air deflectors (4) is offset laterally towards the inside of the vehicle (2) with respect to the wheel (10) of the corresponding wheel arch (8), and oriented towards the outside, the longitudinal axis (K) thereof forming an angle of between 10° and 20° with the longitudinal axis of the vehicle.

2. Motor vehicle (2) according to claim 1, **characterised in that** the air deflector (4) has a cross-section (S-S) which progressively increases height and width from the front to the rear of said air deflector (4).

3. Motor vehicle (2) according to one of claims 1 and 2, **characterised in that** the profile of the front face (12) and/or at least one of the side faces (14; 14') corresponds to an exponential function.

4. Motor vehicle (2) according to one of claims 1 to 3, **characterised in that** the profile of the front face (12) and/or at least one of the side faces (14; 14') corresponds to the equation *y* = *A.exp(B.x)* where y expresses the height of the face and x expresses the position along a longitudinal direction (K) of the air deflector (4), A and B being parameters.

5. Motor vehicle (2) according to claim 4, **characterised in that** the parameter A is of between 1 and 2, and/or the parameter B is of between 0.01 and 0.05.

6. Motor vehicle (2) according to one of claims 1 to 5, **characterised in that** the maximum height (H) of the front face (12) is of between 20mm and 90mm, preferably of between 30mm and 70mm.

7. Motor vehicle (2) according to one of claims 1 to 6, **characterised in that** the or each of the air deflectors (4) offset laterally towards the inside of the vehicle with respect to the wheel (10) is offset by a distance of between 80mm and 300mm, preferably between 100mm and 250mm, with respect to the longitudinal axis (R) of the wheel (10).

8. Motor vehicle (2) according to one of claims 1 to 7, **characterised in that** the front face (12) and the side faces (14; 14') of the air deflectors (4) are arranged so as to deviate air towards the bottom and the sides, respectively, of the wheel (10) of the corresponding wheel arch (8).
